# EUROPEAN PATENT APPLICATION

(11) **EP 2 886 466 A1**
(43) Date of publication of application: **24.06.2015**
(21) Application number: 13198467.6
(22) Date of filing: 19.12.2013
(51) Int. Cl.: B64F 1/36

(54) **Check-in unit**

(71) Applicant: Siemens Aktiengesellschaft, 80333 München (DE)
(72) Inventor: Pinto, Antonio, 2710-190 Sintra (PT)

(57) **Abstract**

The present invention relates to a check-in unit for a pas-senger's and/or luggage check-in.

To increase efficiency of a passenger's and/or luggage check-in a check-in unit (1) comprises an operating unit (2) for checking a passenger and/or a luggage in, wherein the operating unit (2) being rotatable (10) from a first position (3) to a second position (4) with the operating unit (2) being operable in a first mode (5) in the first position (3) and being operable in a second mode (6) in the second position (4).

## Description

### Field of invention

The present invention relates to a check-in unit for a passengers' and luggage check-in, especially an airport's passengers' and luggage check-in.

### Art Background

Check-in in general is known as a process whereby a person announces their arrival at a specific location, for example a hotel or an airport/airport hall, executing an identification procedure to obtain a specific service.

A check-in process at an airport in specific enables a person, i.e. a passenger, - while identifying himself for a flight - to check-in luggage, i.e. hold luggage (except carry-on bags), onto the flight's plane and to obtain a respective boarding pass allowing himself to board the plane. Additional services, i.e. over-weight services, seat reservation services and/or payment services, could also be obtained by the airports check-in (process).

Airlines/carriers, i.e. airport infrastructure management companies, provide facilities, i.e. check-in counters, for the passengers and luggage check-in process, mostly arranged side-by-side in lanes as check-in counter islands, with an airline/agency-employed staff member assisting the passengers to check-in both themselves and their luggage ((staff) attended check-in counters).

These staff attended check-in counters are therefore equipped with several operating/functional units operated by the staff, i.e. an operating unit/terminal provides passenger identification/authentication, seat selection, boarding pass printing, baggage tag printing etc., a conveyor system, a scales and a baggage handling system allows for the processing of associated luggage.

Once a passenger announces himself at the check-in counter operated by the check-in staff, the passenger is identified, passengers luggage is weighed, tagged - and then dropped off/placed on the conveyor that usually feeds the luggage into the main baggage handling system. The luggage will be placed in the aircrafts cargo hold. The check-in counters staff then issues each passengers with a boarding pass allowing the passenger to board his plane (single-step check-in (process)) .

Airlines/carriers and airports have been facing very challenging trends in their exploitation for years with rising operational costs and reducing income.

The increase in operational costs associated to the manned operation of the check-in counters at a thriving rate has lead airlines to pursue efforts in streamlining and/or automating processes/operations.

Hence, operational measures, for example a set of check-in counters for all flights of the same airline for a given moment in time, are launched at airports/in airport halls helping reducing operational costs.

Self-service check-in kiosks - besides the conventional (staff) attended check-in counters - are launched at airports/in airport halls also help reduce operational costs while supporting a two-step check-in process.

In a first step, the passenger identifies himself and selects a flight, a seat and general flight preferences at the self-service check-in kiosk - also getting his boarding pass there. In a second step, the passenger (with his hold luggage) approaches a regular (staff) attended check-in counter or fully automated bag drop-off counter for completion of his check-in process, i.e. for tagging his (hold) luggage and for baggage drop-off.

Self-service check-in kiosks have proved to reduce operational costs, but also proved to be inflexible and ineffective.

This lack of efficiency is due to a reduced acceptance by passengers, difficulties in general adoption by the airlines and insufficient process coverage, by only allowing passenger identification and seat selection at the self-service check-in kiosk, not supporting baggage drop-off at the same location. Even with the presence of self-service check-in kiosks at the airport, regular staff attended check-in counters need to be kept in operation.

It is an objective of the present invention to overcome drawbacks in current known check-in process, especially airport check-ins, e.g. to increase efficiency of a passenger's and/or luggage check-in as well as to reduce airlines/ carriers respective costs.

This objective may be solved by a check-in unit for a passenger's and/or luggage check-in according to the subject-matter of the independent claim. Preferred embodiments of the invention are also subject-matter of the dependent claims.

### Summary of the Invention

According to the present invention, a check-in unit comprises an operating unit, for example a terminal, especially the terminal comprising operating elements and/or operating functions, for checking a passenger and/or a luggage in.

The operating elements and/or the operating functions, especially for operating the passengers' and/or luggage check-in, could be an input device, especially a keyboard or a console or a touch screen or a reader (i.e. passport reader or card reader), a processing device (i.e. processor or PC), a display device, especially a screen or a display or a monitor, and a output device, especially a printer or a plotter or an acoustical and/or a visual output devise (i.e. boarding pass printer or baggage tag printer or luggage tag sticker printer), covers (i.e. maintenance access cover), keys (i.e. conveyor command key), closures, payment systems, weighting systems, authentication systems (i.e. passenger/luggage authentication system), detection systems (i.e. over weight detection system), selection/reservation systems (i.e. seat selection/reservation system), checking/controlling systems (i.e. baggage weight check system).

The operating unit is being rotatable from a first position to a second position, especially being rotatable on a vertical axis from the first position to the second position, further more especially being rotatable on the vertical axis through about 180 degrees.

The rotation of the operating unit can be facilitated via a rotary plate (enabling the rotation) with the operating unit being attached and/or mounted at the rotary plate. The operating unit - for example embodied as a rotatable counter's head section - can further be mounted via the rotary plate at/on a counter's main body with the counter's main body being fixed at/on a ground.

An internal cable routing can be provided for connecting the operating unit with remote resources, for example for an electric power supply and/or for a communication (network), with cable connecting the operating unit being routed inside the counter's main body and/or the rotary plate.

A rotation angle, respectively a rotation motion, of the operating unit can be bordered/limited, especially via mechanical elements, for example via an arrester. Sensors can be provided detecting a rotation position/status of the operating unit.

Being rotated to the first position the operating unit can face a passenger's activity area, especially the operating unit being operable by a passenger in the first position, whereas with being rotated to the second position the operating unit can face a (check-in) staff's working place, especially the operating unit being operable by a (check-in) staff in the second position.

The operating unit is being operable in a first mode, for example a self-service check-in mode, in the first position and being operable in a second mode, for example a staff attended check-in mode, in the second position.

Therefore, "mode" can be understood as an operation category (of the operating unit) providing specific operation categories' services.

The self-service check-in mode - providing a self-service check-in - can be reflected with specific (self-service) operating elements and/or (self-service) operating functions (out of operating elements and/or operating functions provided by the operating unit) with these specific (self-service) operating elements and/or (self-service) operating functions are being activatable or activated or inhibited or accessible or operable while this self-service check-in mode.

As well as the (staff) attended check-in mode - providing a (staff) attended check-in - can be reflected with respective specific (staff attended) operating elements and/or (staff attended) operating functions (out of the operating elements and/or the operating functions provided the operating unit) with these respective specific (staff attended) operating elements and/or (staff attended) operating functions are being activatable or activated or inhibited or accessible or operable while this staff) attended check-in mode.

In other words, with the operating unit comprising/providing operating elements and/or operating functions, especially for operating a check-in, the operating elements and/or operating functions can be activatable or activated or inhibited or accessible or operable depending on the first (for example the self-service mode) and the second mode (for example the staff attended mode).

For example, some of the input devices provided by the operating unit, i.e. keyboard and conveyor command keys, activated in/while the operating unit working/operating in the staff attended mode (being operated by the (check-in) staff) can be inhibited while the operating unit working/operating in the self-service mode (being operated by a passenger). As well as, some of the input devices provided by the operating unit, i.e. passport reader, activated in/while the operating unit working/operating in the self-service mode (being operated by a passenger) can be inhibited while the operating unit working/operating in the staff attended mode (being operated by the (check-in) staff).

The rotation of the operating unit (from the first to the second position and/or between the first and second position) can be synchronized with a switch of the modes (first/second mode), especially synchronized with activating/inactivating and/or accessing/inhibiting operating elements and/or operating functions provided/comprised by/of the operating unit.

Easily expressed, with rotating the operating unit from the first to the second position an operation category/behaviour of the operating unit can be switched, especially automatically and/or electrically, from the first into the second mode, especially with operating elements and/or operating functions provided/comprised by/of the operating unit can be activatable or activated or inhibited or accessible or operable, especially automatically/electrically, depending on the switch, i.e. depending on the first (for example the self-service) and the second mode (for example the staff attended mode).

The check-in unit can be complemented by a baggage handling/ transportation system for a passenger's baggage drop-off/ handling/transportation, especially realizing a check-in counter for operating the passengers' and/or luggage check-in.

The baggage handling/transportation system can comprise an automatic detection system for controlling dropped-off baggage (i.e. automatic detection of misplaced/inexistent tags).

The operating elements and/or the operating functions of the operating unit/check-in unit as well as all the systems of the check-in counter can be connected via cables and/or wireless providing data communication between these elements/ functions and systems. The connections can also be switched, i.e. automatically and/or electrically, switched depending on the (first/second) modes.

With arranging several of these check-in counters side by side in lane a check-in counter lane can be established for providing a parallel check-in of multitudinous passengers.

The invention - basically based on a rotation principle easily provided by the operating unit being rotatable (from a first to a second position) - facilitates a wide range of improvements and advantages.

The design of the operating units' rotation mechanism - synchronized with the switch, especially with an automatic and/or electronic switch, of the modes of the operating unit (from the first/self-service mode to the second/staff attended mode) - form the innovation that grabbed attention of airlines/carriers and/or airport infrastructure management companies with opening a check-in's improvement, cost reduction and effectiveness increase.

The innovative rotation mechanism provided by the check-in unit, i.e. operating unit, brings an easy technical and cost saving possibility, especially via respective standard, cost saving and reliable mechanical elements with allowing fast activation of the self-service mode (as well as fast switching back in the staff attended mode) - with design and form factor being fully compatible with conventional/regular standard counters - of having a two-section counter with the two-section counter comprises a counter's main body section and an upper section - with the upper section comprising the operating unit being mounted rotatably at the counters main body section - and being prepared (depending on the respective mode) for operation by airport/check-in staff (second mode/staff attended check-in) or regular passengers (first mode/self-service check-in).

With the design and form factor therefore being fully compatible with conventional/regular standard counters' base furniture of check-in counters can be the same, ensuring total compatibility with conventional/regular standard counters, i.e. counter lanes. Scanner arch of reduced dimensions can be provided as well as an impact of its presence in the space reserved for the counter staff/operator can be reduced.

As the invention facilitates an operational flexibility by its check-in unit being usable as a regular check-in counter as well as a self-server kiosk, a single-step check-in process as well as a two-step check-in process (as well as a combination of elements of both) is supported by the invention.

Therefore, the check-in unit can support operation in three operational stages: (a) stage with staff providing maximum throughput in passenger processing; (b) stage in self-service, single step providing optimization of operational costs, substituting or complementing the installed base of airport kiosks; (c) stage in bag drop-off supporting the second step of the two-step check-in complementing the action of the airport kiosks.

Mechanical conversion of the check-in unit (by rotating the operating unit from the first to the second position synchronized with the switch from the first to the second mode) - keeping the same form factor of a conventional/regular standard counter - , especially via respective standard, cost saving and reliable mechanical elements, allows fast activation of the self-service mode (as well as fast switching back in the staff attended mode).

Complementing the functionality of the rotating and mode switching mechanism, in the self-service mode the passenger can be driven through a process of interactions with the operating unit, i.e. the operating elements and/or the operating functions of the operating unit, with a help of led indication of active operating elements and/or active operating functions.

Based on the rotating and mode switching mechanism of the invention, the invention can therefore facilitate a "multi purpose check-in unit" realizing an unified solution which can provide a completely automated system for passengers' and/or luggage check-in, i.e. a passenger identification and acceptance of his/her corresponding luggage, complying with normative requirements towards integration in the different DCS (Departure Control Systems), without the need to duplicate check-ins' infra-structures and equipments.

The invention therefore reaches a general improvement in the service provided to passengers and optimization of exploitation costs. Large scale deployment increases the flexibility of the check-in process, maximizing the usage of all counters and increasing also the quality of service provided. Cost in check-in process can therefore be reduced. Airports flexibility can be increased through constant change in configuration with the duplication of equipment.

The above-described characteristics, features and advantages of this invention and the manner in which they are achieved are clear and clearly understood in connection with the following description of exemplary embodiments which are explained in connection with the drawings.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

The illustrations in the drawings are schematical. It is noted that in different figures, similar or identical elements are provided with the same reference signs.
- FIG 1:: shows a "multi purpose check-in unit" (MPCU) with a rotatable head section,
- FIG 2:: shows a check-in counter with a "multi purpose check-in unit" (MPCU) and a baggage handling/transportation system with a rotatable head section of the MPCU located in a second position (staff attended check-in),
- FIG 3:: shows a check-in counter with a "multi purpose check-in unit" (MPCU) and a baggage handling/transportation system with a rotatable head section of the MPCU rotating from a second position (staff attended check-in) to a first position (self-service check-in),
- FIG 4:: shows a check-in counter with a "multi purpose check-in unit" (MPCU) and a baggage handling/transportation system with a rotatable head section of the MPCU located in a first position (self-service check-in),
- FIG 5:: shows a check-in counter with a "multi purpose check-in unit" (MPCU) and a baggage handling/transportation system with a rotatable head section of the MPCU located in a second position (staff attended check-in) (connecting plan (schematically)),
- FIG 6:: shows a check-in counter with a "multi purpose check-in unit" (MPCU) and a baggage handling/transportation system with a rotatable head section of the MPCU located in a first position (self-service check-in) (connecting plan (schematically)) and
- FIG 7:: shows a "multi purpose check-in unit" (MPCU) with a rotatable head section.

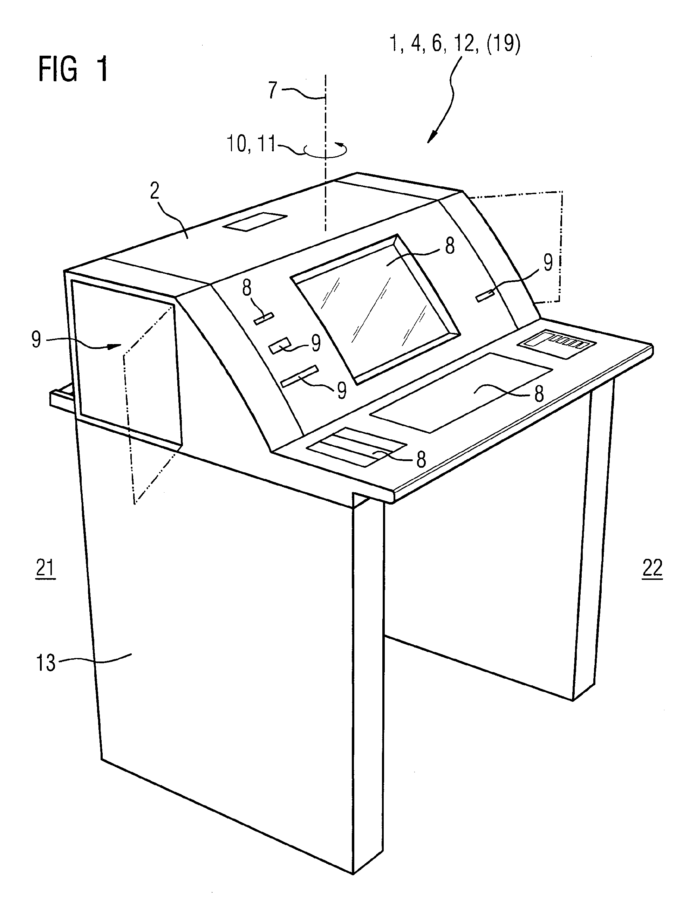

### "Multi Purpose Check-in Unit" (MPCU) (FIG 1 - 7)

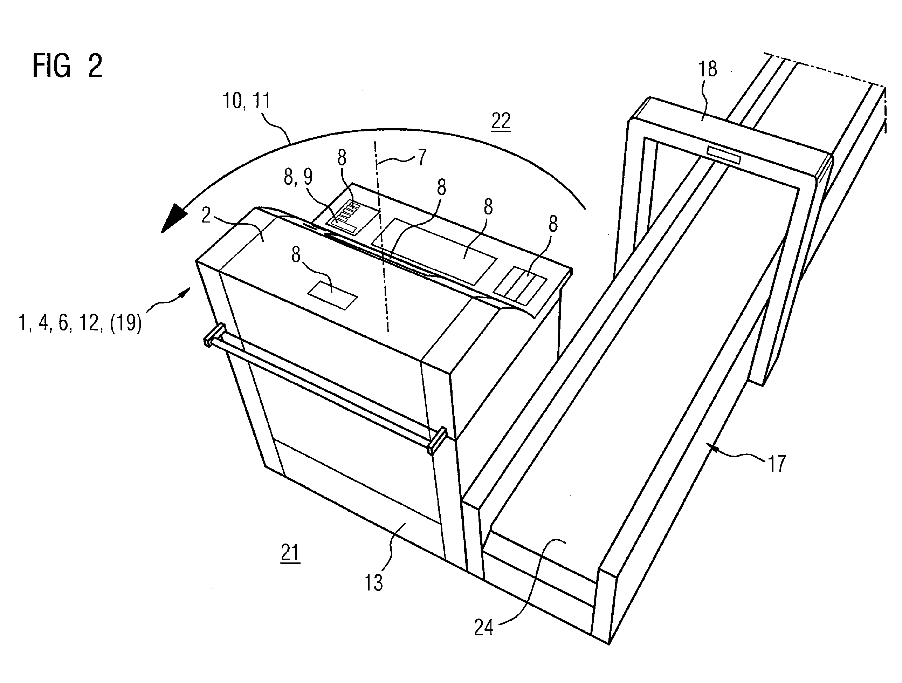

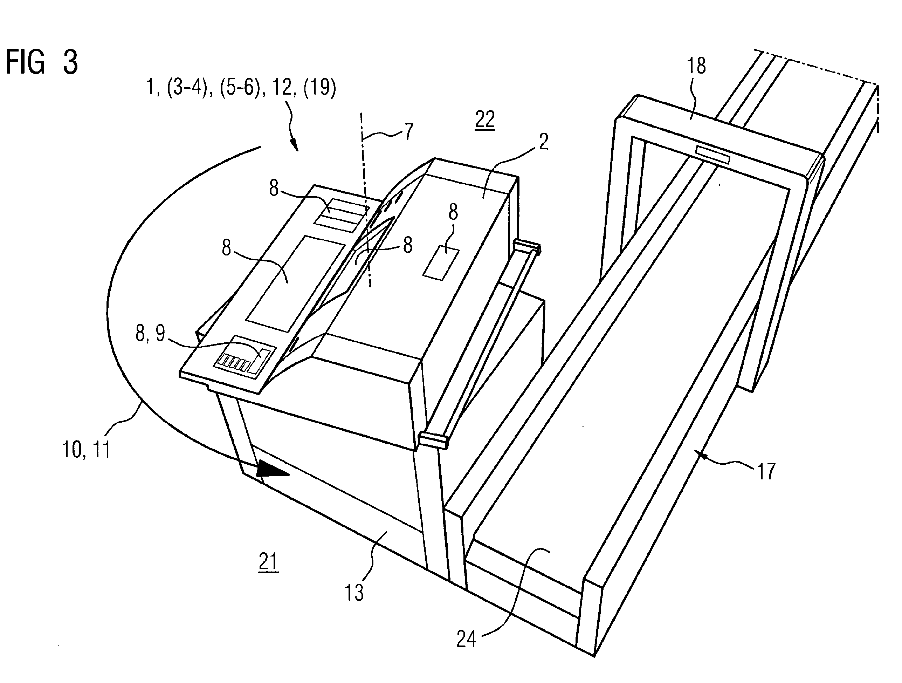

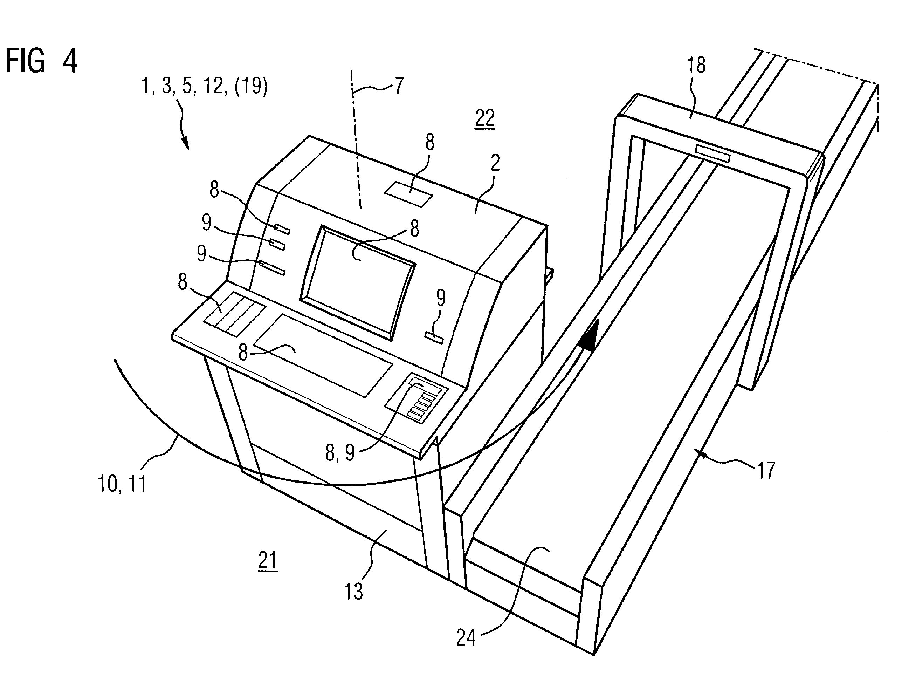

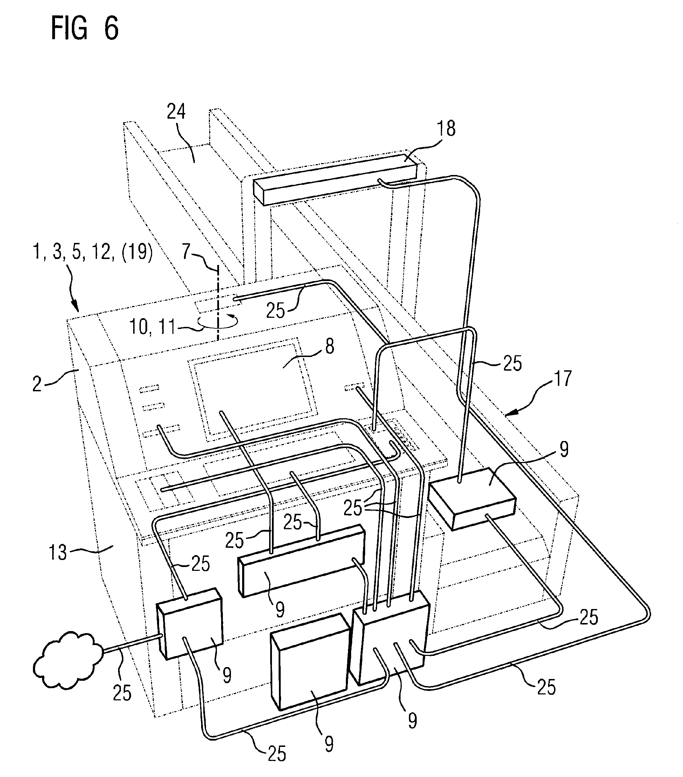

FIG 1 (FIG 2 - FIG 7) shows a check-in unit 1, a "Multi Purpose Check-in Unit" (MPCU) 1, for a passenger's and luggage check-in. "Multi Purpose" as the MPCU 1 can operate as an ordinary check-in counter, when it is configured in an (staff) attended mode 6 (FIG 2, FIG 5, FIG 7), but with the capability of being converted into a self-service check-in mode/counter 5 (FIG 4, FIG 6) by rotation 10 of a head section 2 of the MPCU 1 (FIG 3).

With the MPCU 1 being configured in the self-service mode 5 (first mode, FIG 4, FIG 6) passenger will check-in themselves whereas when being configured in the (staff) attended mode 6 (second mode, FIG 2, FIG 5, FIG 7) (check-in) staff 20 will check-in passenger and passenger's luggage.

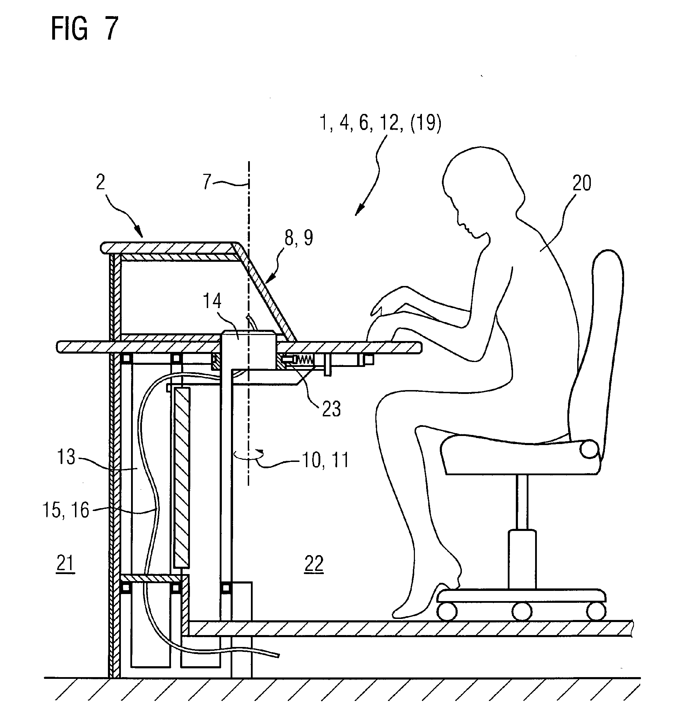

The MPCU 1 comprises a (lower) main body 13 supporting a rotatable head section 2 (operating unit/terminal 2), with the head section 2 being (manually - an automatic rotation 10 can be provided via an electrical actuator) rotatable 10 from a first position 3 (self-service check-in) to a second position 4 (staff attended check-in) - through about 180 degrees on a vertical axis 7 - attached/mounted at/on the main body 13 via a (horizontal) rotary plate 14 (FIG 7) (FIG 2 - FIG 3 - FIG 4).

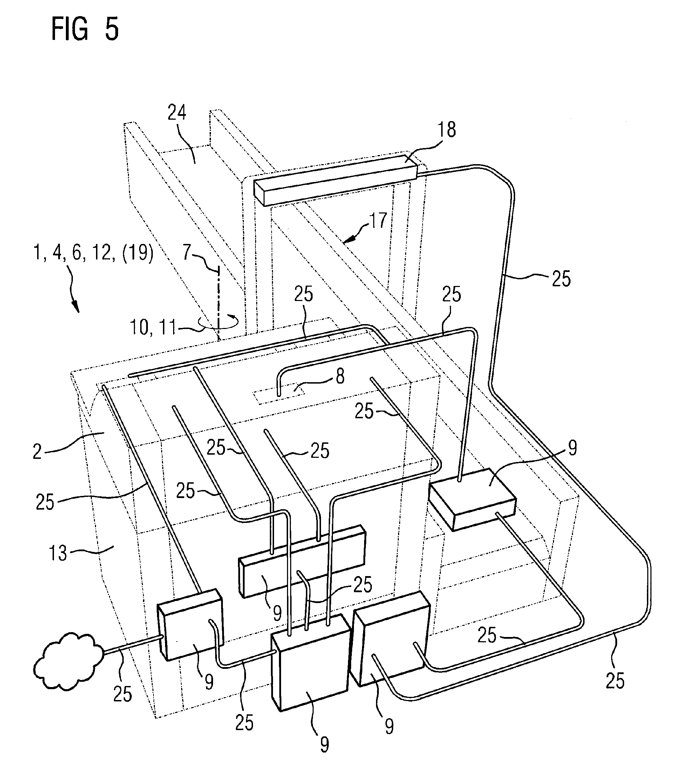

Being rotated 10 to the first position 3 (FIG 4, FIG 6) the MPCU 1, i.e. the head section 2, are facing a passenger's activity area 21, whereas with being rotated 10 to the second position 4 (FIG 2, FIG 5) the MPCU 1, i.e. the head section 2, are facing a (check-in) staff's working place 22 (FIG 7).

The rotation angle, respectively the rotation motion, of the head section 2 is limited via an arrester 23 fixing the head section 2 in position. Sensors (not shown) are provided detecting the rotation position/status of the head section 2 of the MPCU 1.

The head section 2 of the MPCU forms an operational unit/ terminal 2 comprising check-in operating elements/functions 8, 9, i.e. touch screen/main display 8, passport reader 8, keyboard 8, payment terminal 9, boarding pass printer 9, baggage tag printer 9, conveyor command keys 9, LEDs 8, (FIG 1, FIG 2 - FIG 4) - complemented by other (operating) elements/ functions 8, 9 operated by processors and systems, i.e. weighting, PLC, SITA PC, MPCU PC (FIG 5, FIG 6), with specific check-in operating elements/functions 8, 9 being operable by the check-in staff 20 in the (staff) attended mode 6 and/or being operable by passenger operable in the self-service mode 5 selectively (once being inhibited, inaccessible/once being activated, accessible).

The MPCU 1 is complemented by a baggage handling/transportation system 17 for a passenger's baggage drop-off/ handling/transportation, arranged side by side at the MPCU 1, i.e. the main body 13, forming a check-in counter 12 (FIG 2 - FIG 6).

The baggage handling/transportation system 17 comprises a conveyor 24 as well as an automatic detection system 18 for controlling dropped-off baggage, i.e. for an automatic detection of misplaced/inexistent tags at a dropped-off luggage (FIG 2 - FIG 6).

Several check-in counters 12 are arranged side by side in lane forming a check-in counter's lane 19 (not shown).

The check-in operating elements/functions 8, 9 of the MPCU 1 (FIG 2 - FIG 6) as well as the other complementing elements/ functions 8, 9 (FIG 5, FIG 6) and the systems 17, 18, 24 (FIG 2 - FIG 6) of the check-in counter 12 are connected 25 via cables 16 (and network (connection) 25) providing data communication between these elements/functions 8, 9 and systems 17, 18, 24 as well as cables 16 (and network (connection) 25) are provided connecting 25 the MPCU 1, i.e. the check-in operating elements/functions 8, 9, the other (operating) elements/functions 8, 9 and the systems 17, 18, 24 with remote resources (not shown), for example for an electric power supply and/or for a communication (network) (FIG 5 and FIG 6).

These cables 16 (connecting 25 the MPCU 1, i.e. the operating unit/terminal 2) are being routed inside the main body 13 of the MPCU 1 and inside the rotary plate 14 of the MPCU 1 (internal cable routing 15 (FIG 7)) not restraining the rotation 10 of the head section/terminal 2 of the MPCU 1.

The conversion (FIG 2 - FIG 3 - FIG 4, FIG 5 - FIG 6) of the MPCU 1 - from the staff attended mode 6 into the self-service mode 5 (back and forth, bidirectional) - is accomplished by simultaneously executing two synchronized operations, (a) a mechanical operation and (b) a logical (functional) operation:
(a) mechanical operation: rotation 10 of the head section/ operating unit/terminal 2 of the MPCU 1 from the first 3 (self-service check-in) to the second position 4 (staff attended check-in) (back and forth, bidirectional),
(b) logical (functional) operation: electronic, automatic switch 11 from the self-service mode 5 to the staff attended mode 6 (back and forth, bidirectional) by automatic inhibition of some of the operating elements/ functions 8, 9, i.e. input devices 8 (keyboard 8 and conveyor command keys 9), further to the application behaviour, - complemented by switching 11 the operating elements/functions/system connections 25 (where/if necessary, FIG 5, FIG 6).

The mechanical operation, i.e. the rotation 10 of the head section 2 of the MPCU 1, is synchronized automatically with the logical (functional) operation of the MPCU 1, i.e. the electronic, automatic mode switch 11, whereas the modes 5, 6 are switched (between the self-service mode 5 and the staff attended mode 6) while the head section 2 of the MPCU 1 is rotated 10 (between the first 3 and the second position 4).

Complementing the functionality of the mechanism, in self-service mode 5 the passenger (operating the terminal 2) is driven through the process of interaction with the equipment/terminal 2 with the help of LED indication 8 of the active operating elements/functions 8, 9, i.e. devices (Figure 6).

The check-in process in the self-services mode 5 can operate by the steps of (operated by passengers themselves by operating the MPCU terminal 2, i.e. respective active operating elements/functions) 8, 9:
- passenger's authentication and seat selection
- printing out of the boarding pass and luggage tag sticker
- weight checking of luggage and over-weight detection
- identification of luggage (application of the tag sticker)
- transporting luggage by the conveyor/baggage handling system with (a) an automatic detection of misplaced/inexistent tags (and also an automatic rewind of the conveyor for correct label application) and (b) successful reading of the tag, and consequent complete transport by the conveyor/baggage handling system.

The check-in process in the staff attended mode 6 can operate by the steps of (operated by the check-in staff 20 by operating the MPCU terminal 2, i.e. respective active operating elements/functions 8, 9):
- passenger's authentication and seat selection
- passenger's luggage weighing and tagging
- luggage dropping off on the conveyor
- issuing passengers with boarding passes.

The design of the rotation mechanism (rotating 10 the head section/terminal 2 between the first 3 and second position 4), synchronized with the electronic switch 11 of the modes 5, 6 (from the staff attended mode 6 to self-service mode 5) - accomplished by the internal cable routing 15 (FIG 7) - forms the basis for the technical possibility of having a two-section counter 12, with its head section/terminal 2 being prepared for operation by airport staff 20 or regular passengers.

The main goals enabled by the MPCU 1 are an intuitive and fast usage, an optimization of airport's and airlines' infra-structures, an increase control in baggage processing, decrease process time in baggage processing, an optimization of human resources involved in the baggage processing and a general increase in the quality of the provided service.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

Although the invention is illustrated and described in detail by the preferred embodiments, the invention is not limited by the examples disclosed, and other variations can be derived therefrom by a person skilled in the art without departing from the scope of the invention.

## Claims

1. Check-in unit (1) for a passenger's and/or luggage check-in comprising an operating unit (2) for checking a passenger and/or a luggage in, wherein the operating unit (2) being rotatable (10) from a first position (3) to a second position (4) with the operating unit (2) being operable in a first mode (5) in the first position (3) and being operable in a second mode (6) in the second position (4).

2. Check-in unit (1) according to any one of the preceding claims wherein the operating unit (2) is being rotatable (10) on a vertical axis (7), especially being rotatable (10) through about 180 degrees on the vertical axis (7).

3. Check-in unit (1) according to any one of the preceding claims wherein the first mode (5) is a self-service check-in mode and/or the second mode (6) is a staff attended check-in mode.

4. Check-in unit (1) according to any one of the preceding claims wherein the operational unit (2) comprises operating elements (8) and/or operating functions (9) with the operating elements (8) and/or operating functions (9) being activatable or activated or inhibited or accessible or operable depending on said first (5) and second mode (6).

5. Check-in unit (1) according to the preceding claim wherein the operating elements (8) and/or the operating functions (9) are selected out of the group of an input device, especially a keyboard or a console or a touch screen or a reader (i.e. passport reader or card reader), a processing device, a display device, especially a screen or a display or a monitor, and an output device, especially a printer or a plotter or an acoustical and/or a visual output device (i.e. boarding pass printer or baggage tag printer or luggage tag sticker printer), covers (i.e. maintenance access cover), keys (i.e. conveyor command key), closures, payment systems, weighting systems, authentication systems (i.e. passenger/luggage authentication system), detection systems (i.e. over weight detection system), selection/reservation systems (i.e. seat selection system), checking/controlling systems (i.e. baggage weight check system).

6. Check-in unit (1) according to any one of the preceding claims wherein a rotation (10) of the operating unit (2) is synchronized with a switch (11) of the modes (5, 6).

7. Check-in counter (12) comprising a check-in unit (1) according to any one of the preceding claims and a counter's main body (13) with the operating unit (2) being mounted rotatably (10) at the counter's main body (13) (rotatable counter's head section), especially being mounted rotatably (10) via a rotary plate (14) enabling the rotation (10).

8. Check-in counter (12) according to any one of the preceding check-in counter claims further comprising an internal cable routing (15) with cable (16) connecting the operating unit (2) being routed inside the counter's main body (13) and/or the rotary plate (14).

9. Check-in counter (12) according to any one of the preceding check-in counter claims further comprising a baggage handling/transportation system (17) for a passenger's baggage drop-off, especially the baggage handling/transportation system (17) comprising an automatic detection system (18) for controlling dropped-off baggage (i.e. automatic detection of misplaced/inexistent tags).

10. Check-in counter lane (19) comprising several of check-in counters (12) according to any one of the preceding check-in counter claims with the several check-in counters (12) being arranged side by side in lane.
